(19) Europäisches Patentamt
European Patent Office
Office européen des brevets

(11)     **EP 2 675 870 B1**

(12)                          **EUROPEAN PATENT SPECIFICATION**

(45) Date of publication and mention
of the grant of the patent:
**11.09.2019   Bulletin 2019/37**

(51) Int Cl.:
*C10G 1/10* *(2006.01)*      *C10G 15/08* *(2006.01)*
*C10B 53/07* *(2006.01)*      *C10B 19/00* *(2006.01)*

(21) Application number: **12718344.0**

(22) Date of filing: **20.02.2012**

(86) International application number:
**PCT/IB2012/050747**

(87) International publication number:
**WO 2012/110990 (23.08.2012 Gazette 2012/34)**

(54) **PRODUCTION OF HYDROCARBONS FROM COPYROLYSIS OF PLASTIC AND TYRE MATERIAL WITH MICROWAVE HEATING**

HERSTELLUNG VON KOHLENWASSERSTOFFEN AUS COPYROLYSE VON KUNSTSTOFF UND REIFENMATERIAL MIT MIKROWELLENHEIZUNG

PRODUCTION D'HYDROCARBURES À PARTIR DE COPYROLYSE DE MATIÈRES PLASTIQUES ET DE MATÉRIAUX DE PNEU AVEC CHAUFFAGE PAR MICRO-ONDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **18.02.2011   IT FI20110029**

(43) Date of publication of application:
**25.12.2013   Bulletin 2013/52**

(73) Proprietor: **TECHWAVE S.r.l.**
**54100 Messa (MS) (IT)**

(72) Inventors:
• **FREDIANI, Piero**
  **I-50121 Firenze (IT)**
• **ROSI, Luca**
  **I-50136Firenze (IT)**
• **FREDIANI, Marco**
  **I-51100 Pistoia (IT)**
• **UNDRI, Andrea**
  **I-50136 Firenze (IT)**
• **OCCHIALINI, Silvio**
  **I-50068 Rufina (IT)**

(74) Representative: **Valenza, Silvia et al**
**Notarbartolo & Gervasi S.p.A.**
**Corso di Porta Vittoria 9**
**20122 Milano (IT)**

(56) References cited:
WO-A1-2007/053088     US-A- 5 084 140
US-A1- 2006 287 560    US-A1- 2008 314 730
US-B1- 6 184 427

**Description**

FIELD OF THE INVENTION

The present invention relates to the field of methods of recycling plastic materials, in particular to recycling of tyres at their end-of-cycle (PFU), polyethylene (PE), polypropylene (PP), polystyrene (PS), polyethylene terephthalate (PET), polyvinyl chloride (PVC) and their mixtures.

STATE OF THE ART

In Italy, in 2008 were produced $3.5 \times 10^6$ tons of plastic materials, and $1.5 \times 10^6$ of these were collected for disposal; in the same year $4.1 \times 10^5$ tons of tyres have been changed in motorcars and motor vehicles to be recycled. Polyethylene (PE), polypropylene (PP), polystyrene (PS), polyethylene terephthalate (PET), polyvinylchloride (PVC), polyurethanes (PU) represent up to 90% of the waste in plastics, specifically 60 to 65% by weight are polyolefins PE and PP, between 10 to 20% by weight is PS and a quantity from 12 to 17% is PVC.

The increasing use of plastic material in recent years is giving rise to some concern on the possibility of handling their disposal. Since plastic is replacing wood, glass, paper, and metal in many areas such as for example in packaging and the manufacture of many articles, this contributes always increasingly towards the composition of the municipal solid waste (MSW).

Handling of these large quantities of waste is an environmental issue of enormous proportions that has required and requires a considerable effort for the technological and scientific development of effective systems for their recycling and disposal.

Since the early 90's, interest in the disposal in dumping grounds has shifted towards recycling, or at least energy recovery, thus paving the way for a new business sector: the industry of collecting, storing, cleaning, reprocessing, and manufacturing of renewed articles ready to be introduced once again on the market.

Recycling of plastics has many aspects both technological and economic that must be assessed. A first major problem concerns the variable composition of the waste, both for polymers types and for the presence of additives and other substances such as glues, inks, labels, and organic residues.

In addition, many thermoplastic materials are immiscible with each other and recycling by simple reprocessing cannot lead to obtaining a material with good properties. Generally, remelting polymer mixtures worsens their physical properties, stability and processing. A recycle that is efficient with this type of approach provides use of homogeneous plastic materials or, when possible, use of large amounts of compatibilisers.

The technologies for recycling of plastic materials can be divided into four categories:

- Primary: regrind and reprocessing by moulding
- Secondary: mechanical type processing of the plastic material.
- Tertiary: feedstock for chemical processes or energy production.
- Quaternary: incineration.

Each of these technologies has an important role in the recycling of plastics, even if those processes capable of retaining the material with respect to their incineration or disposal in dumping grounds are to be preferred.

The tertiary recycling comprises all the heat treatments of plastic waste that lead to chemical or petrochemical products of interest. Several technologies are available and currently used: pyrolysis, gasification, and hydrogenation. Heat treatments are extremely versatile and can be used in the recycling of all those materials otherwise difficult to recover such as, for example, contaminated medical waste, polymeric residues of motorcars, and many other types of waste of complex formulation. Selection of the recycling technique is made on the basis of the purity of the waste, the chemical composition, and the nature of the additives. Pyrolysis processes convert the PE, PP, PS, PET, and PVC in oils to be used both by the petrochemical industry and in the existing refining processes.

By the term pyrolysis, reference is made to all those processes wherein energy is supplied, generally in the form of heat, to an organic compound to facilitate decomposition. This type of thermochemical degradation is an approach of considerable interest in the recovery and appreciation of post-consumer plastic materials. Pyrolysis is an endothermic process and is carried out at temperatures from 250 °C up to over 1,000 °C. It leads into obtaining liquid and gaseous products, while certain solid products are constituted by carbon residues or inorganic non-pyrolisable fillers. These general considerations can be applied both to the treatment of plastic materials and to the PFU

The five main categories of plastic materials, identifiable in urban solid waste, are polyethylene (HDPE and LDPE), polypropylene (PP), polystyrene (PS), polyethylene terephthalate (PET), and polyvinyl chloride (PVC). The pyrolysis process of these macromolecules leads into obtaining a gas, a liquid, and generally a solid residue. The proportions among these products are directly related to the type of treated material, but also to the type of reactor and the process conditions, in particular on the temperature and heating rate used. Most research has focused on the study of the pyrolysis processes of single polymers or mixtures thereof, to simulate the true composition of the MSW. Just as for the pyrolysis of individual PFU, also the pyrolysis of polymeric materials was carried out with various types of reactors: tubular, fluid-bed, autoclaves, and rotary ovens. The most promising technology is that which employs a fluidised bed reactor, since it provides excellent mass and heat transfer, ability to maintain a constant temperature throughout the reactor (P.T. Williams, E.A. Williams, Energy & Fuel, 1999, 13, 188).

The microwave-induced pyrolysis is a process of new concept and was introduced for the first time by Tech - En Ltd (U.S. 5,387,321; U.S. 5,330,623). The plastic materials have very small dielectric constant and loss factor. This implies that generally they do not absorb microwaves and therefore cannot heat at the pyrolysis temperature. The problem can be circumvented if in the mixture of plastics, which are transparent to microwaves, an absorbent material such as carbon is added. This type of pyrolysis then takes the name of microwave-assisted pyrolysis. The energy transfer from the absorbing material (carbon) to the polymer can be very efficient. This type of heating causes formation of oxygenated organic compounds only for the quantities of oxygen present in plasticisers, additives, paints, inks, paper or other materials that make part of the treated products.

US 6 184 427 discloses a process for pyrolysis of plastic material by irradiation with microwaves.

The present invention relates to this context on the research for new and always more efficient methods of recycling and reuse of plastic materials and of end-of-use tyres, which has as first objective, proposing the production of hydrocarbons. Purpose of the present invention is therefore a microwave pyrolysis process for the conversion of this waste into solid, liquid, and gaseous products which may find new use in various industrial sectors: from the production of electrical energy for combustion to the synthesis of plastic materials for polymerisation.

In particular, to be able to obtain high added value liquid products (characterised qualitatively and quantitatively) for their use, possibly even direct, such as petroleum fractions, or for the extraction of their majority components (for example limonene, benzene, toluene, xylene, or other hydrocarbons prevailing therein).

DEFINITIONS AND ABREVIATIONS

$V_{M\%}$: Mean percentage pyrolysis rate:

$$V_{M\%} = 100 \, \frac{(M - M_r) * M^{-1}}{t}$$

wherein M is the total mass undergoing pyrolysis process; $M_r$ is the less mass in the pyrolysis reactor; t is the duration of the pyrolysis experiment.

$V_{M\,risc}$: Mean heating rate of the mass undergoing pyrolysis.

$$V_{M\,risc} = \frac{T_f - T_i}{t}$$

wherein $T_f$ and $T_i$ are the final and initial temperatures of the pyrolysis process and *t* is the duration of the experiment.

SUMMARY OF THE INVENTION

The present invention is defined in claim 1.

Surprisingly, by the above process pyrolysis oils are obtained having a sulphur content <1% by weight and a fraction greater than 50% by weight of distillable hydrocarbons comprised between 20 and 250 °C.

When operating under conditions of variable modulation of the microwave power, it is preferable to modulate the delivery in an increasing manner.

From a macroscopic point of view, the oils obtained by the process of the present invention appear straw yellow in colour and are transparent, while those obtained under conditions other than the process of the invention appear brown in colour and are turbid, or actually they solidify at room temperature clogging the entire condensation system, but above all their hydrocarbon content with boiling points less than or equal to 250 °C, do not exceed 30 to 40% by weight of the collected liquid fraction.

The oils obtained by means of the process of the invention can be used for the recovery, through further refining, of raw materials such as for example, limonene, benzene, toluene, xylene, or other hydrocarbons prevailing therein. Actually, the oils obtained from the process of the invention could be used directly as fuel for motor vehicles, or be mixed with commercial fuels.

BRIEF DESCRIPTION OF THE FIGURES

Figure 1 - Experimental apparatus (Set-up A) used for the pyrolysis of tyre fragments and other plastic materials.
Figure 2 - Experimental apparatus with fractionation (Set-up B) used for the pyrolysis of tyre fragments and other plastic materials.

DETAILED DESCRIPTION OF THE INVENTION

The pyrolysis oils obtainable by the process according to the present invention also have PCS and PCI comprised between 33 and 48 MJ/kg; viscosity comprised between 0.49 and 2.80 cps; density less than or equal to $0.932gr/cm^3$.
Preferably, the density of the pyrolysis oils obtained by the process is less than $0.850gr/cm^3$ and the viscosity comprised between 0.80 and 2.20 cps.
Preferably, one or more generators are used, operating at a frequency of 2.45 GHz.
By operating in the presence of a fractionation system, it is possible to obtain pyrolysis oils which contain limonene, benzene, toluene or other single ring compounds in quantities at times even greater than 20% (as percentage area of the GC-MS analysis). The high quantity of single ring aromatic compounds, such as toluene, benzene, styrene, etc., makes pyrolysis oils a possible resource from which to isolate the prevailing compounds
In addition and preferably, the quantity of distillable hydrocarbons in the range of 20 to 250 °C may reach and exceed 85% by weight of the pyrolysis oil.
The following are examples of fractionation systems

- Dephlegmator with air-cooling
- Dephlegmator with column filled with Fenske, Rashig, Pall, Lessing, and Cross-Partition rings
- Dephlegmator with column filled with Berl, and Intalox saddles
- Dephlegmator with column filled with glass beads of various diameters (0.5 to 4 mm)
- Dephlegmator with plate column

and their similar industrially viable systems.
Preferably, the ratio by weight between plastic materials and PFU varies between 1:1.5 and 1:4.0, while in the case of solid PFU pyrolysis residue, use of said ratio varies between 1:0.5 and 1:1.
The yield of the pyrolysis process is always 100 %.
Concerning the yields of pyrolysis oil in the process of the invention, these may vary between 5 and 90%. The yields of the solid product vary between 10 and 60%, while those of the gaseous product vary between 4 and 75%.
The sulphur content of the pyrolysis oils does not exceed 1.0%: these liquid products, therefore, may fall into the class of low sulphur content fuel oils (BTZ, the limit of the sulphur content being 1% by weight), and also the results with respect to the heat power allow to insert the liquid products in this class of commercial products. The possible use as diesel fuels for motor vehicles of liquid products, however, is limited in the light of the new regulation provisions on the subject of fuel quality (from 1 January 2009, the maximum sulphur content in fuels for motor vehicles is set at 10 mg/Kg). In the course of the pyrolysis process, a sulphurated compounds sequestering agent, e.g. $Ca(OH)_2$, is used, causing a reduction of the sulphur content of the pyrolysis oils.
Use of a fractionation system has as a first effect reduction of the pyrolysis mean rate compared to the corresponding tests without fractionation. In particular, test 2 corresponds with test 9, and test 5 corresponds with test 10 (Table 3).
The pyrolysis process with microwave heating has proved to be an **effective, selective,** and **environmentally friendly** method for the thermal degradation of plastic materials in a mixture with tyres or their pyrolysis residues.
**Effective** because, compared to other processes with electric heating, or with burners, the transfer of power to the mass to undergo thermal degradation is immediate. It is not necessary to use even complex systems such as fluidized bed reactors for a rapid transfer of heat. Treatment times are considerably reduced, even up to 90%, with respect to what is reported in the literature for conventional thermal pyrolysis.
**Selective,** since it allows obtaining pyrolysis oils with some basic features both for their use as a fuel and as a source of petrochemical industry products. Specifically, it was possible to obtain pyrolysis oils with a density, viscosity, and variety of substances that make up the mixture with high percentages of the distillable fraction typical of petrol and diesel oils. In addition, a discrete selectivity in the production of certain types of hydrocarbons of commercial interest has been reached. For copyrolysis of polymeric materials such as HDPE, PP, PS, PET, and PVC, it has been possible to degrade them completely with yields comparable with those reported in the literature for heating the fluid bed reactor. For the PS, it has been possible to obtain large amounts of styrene monomer, for PET up to 60% of the liquid product is constituted by benzene. HDPE and PP were instead converted to mixtures of hydrocarbons. The pyrolysis of PVC has led into a rapid conversion of more than 90% of the chlorine content in the polymer in hydrochloric acid and in a subsequent degradation of the polymer chain into hydrocarbons. Even for the pyrolysis of these polymers, use of the experimental set-up with dephlegmator (type B) has improved overall the characteristics of the liquid phase (density, viscosity, distillable fraction, and variety of the constituents).

**Environmentally friendly,** for the simple alternative that the process provides for all the collection and dumping, incineration, waste-to-energy and conventional pyrolysis processes. It preserves the energy and chemical content of polymeric materials by not oxidizing, but by depolymerising the macromolecules that constitute the charge by transforming them into a potential substrate for the petrochemical industry. There is no dispersion in the environment either of waste or of hazardous or potentially hazardous burning residues, such as sulphurous compounds and heavy metals.

The present invention will be better understood in the light of the following embodiments.

EXPERIMENTAL PART

The pyrolysis experiments were carried out by means of a microwave laboratory oven manufactured by Bi.Elle s.r.l. Company (No. 6, via Ho Chi Min, Modena, Italy). The oven consists of a sealed chamber, inside of which there is a turntable, four microwave generators outside the oven (characterised by a total power absorption of 8 KW (4 x 2 KW), that deliver a maximum power of 6 KW as an electromagnetic field operating at a frequency of 2,450 MHz) which communicate with the interior of the chamber through small windows located at half height of the chamber. The position and the method adopted of the microwave generators, of the magnetron type, ensure uniformity of the MW field inside of the entire chamber.

At the top of the chamber, the oven has a 40 mm diameter hole for the escape of gases and vapours.

In addition, to ensure real-time reading of the temperature inside the chamber, an infrared sensor, and a pyrometer were installed in the centre of one of the inner walls.

The oven is operated by an electronic system which allows adjusting the delivery of microwaves, even in continuity, by varying the electrical power absorbed individually by each generator. The system allows the creation of heating programmes, characterised by temperature steps, monitored by the infrared probe, with the control of the delivered power and the duration of the step for each value of temperature.

However, it is not possible to set a constant and defined heating rate (°C/min). The end-of-life (PFU), used for carrying out the pyrolysis experiments, were thermal tyres from a commercial motor vehicle, *Michelin* brand, *Agilis* model *81 - 195/65 R16C.*

The CHNS elemental analysis only of the tyre compound has provided the results reported in Table 1.

Table 1 - CHNS elemental analysis of the Michelin Agilis tyre compound 81 -195/65 R16C

| C (%) | H (%) | N (%) | S (%) |
|-------|-------|-------|-------|
| 88.19 | 7.23 | 0.23 | 1.76 |

The plastic materials subjected to pyrolysis process have been selected on the basis of their presence in the RSU: polystyrene (PS), high-density polyethylene (HDPE), polypropylene (PP), polyethylene terephthalate (PET) and polyvinylchloride (PVC). The PS necessary for the tests was derived from foam PS used in packaging of materials. This was first heated to above its softening temperature, about 60 °C, and reduced in volume to be able to handle higher quantities in a lesser volume. The HDPE was recovered from a tank for solvents, suitably fragmented for easy handling and durability in time thereof. The PP was obtained from a container often dedicated to the disposal of contaminated material available in many laboratories. The PET was obtained from 0.5 L bottles of mineral water. The PVC was purchased pure from Sigma-Aldrich Company for minimising likely unforeseen interferences of any plasticisers and additives.

The polymeric materials before being subjected to the pyrolysis process were characterised through FT - IR and by means of CHN analysis.

Table 2 - CHN analysis of polymers used in pyrolysis experiments (estimated values and measured values)

| | C (wt%) | | H (wt%) | |
|------|-------|-------|-------|-------|
| | Calculated | Measured | Calculated | Measured |
| PS | 92.26 | 92.10 | 7.74 | 7.84 |
| HDPE | 85.63 | 85.30 | 14.37 | 14.23 |

(continued)

|  | C (wt%) |  | H (wt%) |  |
| --- | --- | --- | --- | --- |
|  | Calculated | Measured | Calculated | Measured |
| PP | 85.63 | 85.14 | 14.37 | 14.61 |
| PET | 62.50 | 66.28 | 4.20 | 4.04 |
| PVC | 38.44 | 38.23 | 4.84 | 4.65 |

Although the dimensions and power of the oven at our disposal could enable carrying out the pyrolysis experiments both with entire tyres and non fragmented plastic waste, for reasons of operating simplicity, reproducibility and safety, an experimental design was preferred with which to treat 300 to 500 gr. portions of materials both of only PFU and a mixture of PFU with plastic materials.

A tyre consists of several portions, characterised by relative quantities of reinforcement materials (steel) and different compounds, in relation to its function. In a typical experiment, cross sections of about 200 to 350 gr. of the tyre, further fragmented into pieces with sides of about 2 cm, were subjected to pyrolysis: a cross section can be considered a representative sample of an entire tyre since within the sample, all the portions of the tyre (tread, sides and bead) are found in the same proportions with respect to the entire tyre.

Before undergoing pyrolysis, the plastic materials were fragmented in pieces with sides of 2 cm to enable introducing them easily into the pyrolysis apparatus, and to have sufficient homogeneity of the treated sample.

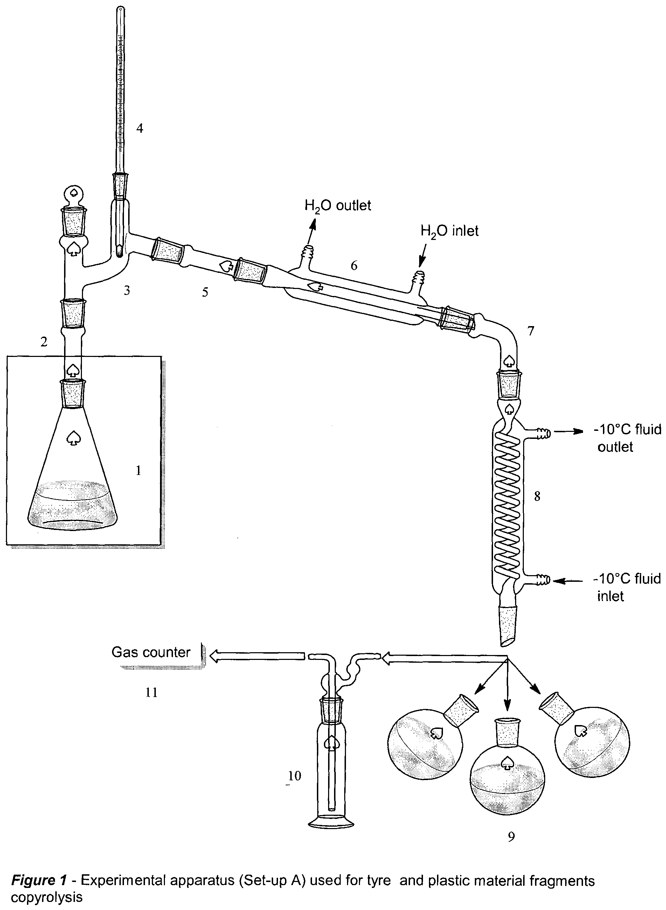

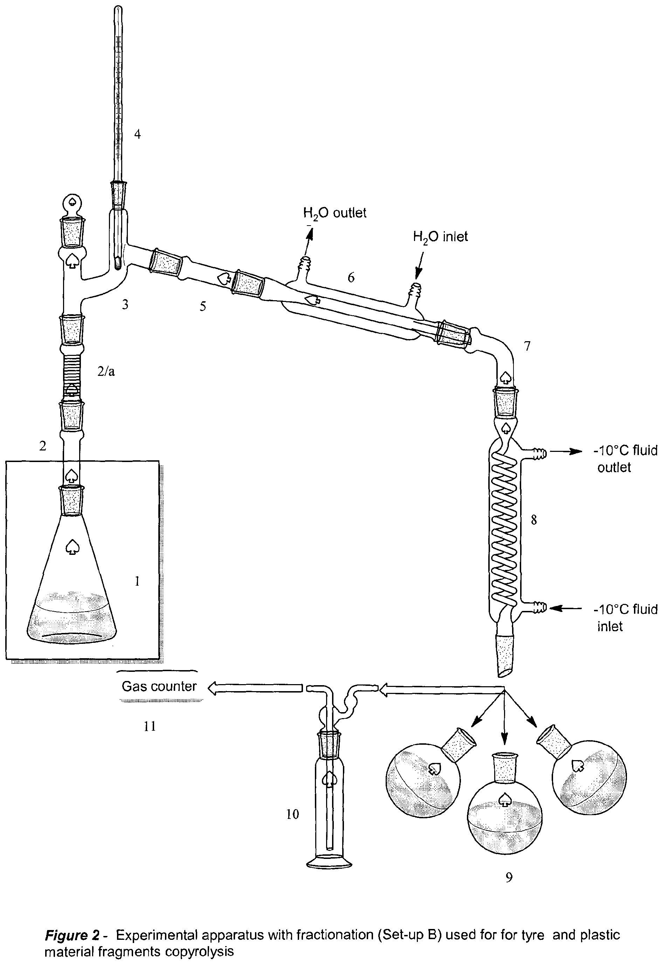

In Figure 1 is shown a system (Set-up of the A type) of the experimental apparatus used for the execution of the pyrolysis experiments, while in Figure 2 is shown the fractionation system (Set-up B)

The tyre fragments were introduced, after drying in an oven at 65 °C for 48 hours, within a 1dm$^3$ Pyrex glass flask, used as a reaction vessel (1): this latter was housed in the centre of the oven chamber, at a height corresponding to that of the emission windows of the MW field and of the infrared sensor.

The reaction vessel was connected, by means of Pyrex glass joints (2) to a Claisen head (3) with a thermometer (4) located outside the oven chamber. A straight Pyrex glass joint (5) connected the Claisen head to a water-cooled straight cooler (6) (at room temperature), in turn connected by a bend fitting (7) to a cooling coil (8) cooled at -10 °C, and with a thermostat. A collection system (9), installed downstream of the last cooler, collected the condensable liquid products. A liquid nitrogen trap (10) was connected to the flask collection system of the liquid phase allowing condensation of the vapours of the substances which possibly, despite being liquid at room temperature, were dragged by the gas stream. Finally, the non-condensable part was collected in a gas counter (11).

The experimental apparatus used for the execution of the pyrolysis fractionation experiments of the vapours in outlet from the MW oven (Figure 2) had a set-up of the B type, which was similar to the system of the A type, but differed for a glass Pyrex vertical joint (2/a), located above the joint (2) in outlet from the oven immediately before the Claisen head, filled with 4 mm diameter glass beads, or with another fractionation system among those reported in the paragraph on the fractionation systems, with the purpose, precisely, of fractionising the vapours in outlet from the oven. These vapours, passing through the fractionation column were deprived from that component which had a boiling temperature higher than the temperature of the vapours. This system thus allowed dropping back into the reaction vessel the higher boiling compounds that had been dragged by the vapour stream.

The pyrolysis experiments were carried out in an inert atmosphere: the operating conditions of the process; the operating variables and any modifications to the system just described are reported and discussed subsequently.

The degradation process started on average 30 seconds after the ignition of the microwave generators regardless of the delivered power. The vapours in outlet initially were white, which, with the increase of the flow of material in outlet from the oven became coloured up to yellow-brown. Initially, only a minimum fraction of the vapours condensed before reaching the coolers.

Once completed the pyrolysis experiments, the equipment was disassembled as soon as room temperature was reached, and the products in the condensed phase were taken directly in the vessels in which they were collected (a one-neck ball for the liquid products, a flask wherein the reaction for the solid residue was carried out, and a gas counter for gaseous products). In this way, the introduction of artefacts in the subsequent characterisations was minimised (the absorption of atmospheric water from the solid residue and the release of the more volatile components from the liquid product are the most likely alterations).

The liquid products (pyrolysis oils) were centrifuged at 3,000 rpm for eliminating any solid materials in suspension. Samples of liquid products were transferred into 2 cm$^3$ vials and sent to the determinations of the upper heat power and elemental composition (CHNS analysis). The liquid products were also characterised by infrared spectroscopy and nuclear magnetic resonance spectroscopy, determinations of the density and composition by GC-MS analysis, also carried out on the centrifuged and homogenised liquid.

The solid residues were taken from the reaction vessel (a 1dm$^3$ Pyrex glass flask), fragmented, and homogenised in a mortar until obtaining a powder. Dust samples were then transferred into 2 cm$^3$ vials and used for determining the upper heat power and the elemental composition (CHNS analysis).

The gaseous mixtures produced during the pyrolysis process were collected in a gas counter, connected to the nitrogen liquid trap located immediately upstream in the process system. The volume of gas was measured by means of a GFW Luzern water counter installed upstream of the sampling system. The sampling of the gaseous mixtures for the subsequent characterisations was carried out directly by the gas counter through a single 250$\mu$L Hamilton Gastight syringe. Measurement of the pyrolysis oil density was carried out by weighing the mass of oil contained in a known volume under standard conditions (25.00 °C, 1atm.). Measurement of viscosity was determined on the liquid products by means of an Ostwlad viscometer thermostat at 25.00 °C in a silicone oil bath Julabo thermostat, ME-18V model. The upper heating power level (U.H.P.) was determined for the pyrolysis products in the condensed phase, pyrolysis oil, and solid residue. In addition, from the U.H.P. it was calculated the lower heating power level (L.H.P.), by using the results of the elemental analysis carried out on the same samples. The determination of the heat power of the condensed phases was carried out by the ESSE.TI.A. s.r.l. Company, at No. 121/123, viale dell'Arte della Paglia, 50058 Signa (FI), Italy, through a method which consists in measuring the temperature before and after combustion, with excess oxygen, of a known mass sample in a calorimetric bomb completely immersed in a calorimeter. The GC-MS analyses of the liquid products, for the identification of the substances constituting the mixtures, were carried out through the GC-MS QP5050A Shimadzu instrument, equipped with a quadruple mass analyser, and having a Supelco Equity 5 capillary column or 100 m. Petrocol.

All pyrolysis oils were subjected to fractional distillation, with the purpose of separating fractions with characteristics (boiling point, density, and viscosity) comparable to petroleum products.

The pyrolysis experiments are shown below with unique identifying numbers: the pyrolysis products will be indicated by preceding the identifying number of the experiment with letter G for gases, with letter L for liquids, and with letter S for solid residues.

Table 3 shows the conditions of the carried out experiments

*Table 3 - Pyrolysis experiments*

| Test No. | Charge subjected to pyrolysis (ratio by weight) | Set-up | Delivered % power (%) | Tmax (°C) | Duration (min) | Pyrolysed mass (g) | $V_{M\%}$ (/min) | $V_{Mrisc}$ (°C/min) | Solid (wt%) | Liquid (wt%) | Gas (wt%) | Set-up of the liquid fraction |
|---|---|---|---|---|---|---|---|---|---|---|---|---|
| 1 | PFU | A | 50 | 495 | 39 | 233.3 | 1.27 | 12.18 | 50.45 | 39.21 | 10.34 | brown turbid |
| 2 | PFU:HDPE=2:1 | A | 50 | 493 | 33 | 447.3 | 1.74 | 14.33 | 42.49 | 47.16 | 10.35 | solid at room temperature |
| 3 | PFU:PP=2:1 | A | 50 | 599 | 39 | 385.4 | 1.66 | 14.85 | 35.29 | 56.00 | 8.71 | brown turbid |
| 4 | PFU:PS=2:1 | A | 50 | 557 | 60 | 439.4 | 1.00 | 8.95 | 39.90 | 56.10 | 4.00 | brown turbid |
| 5 | PFU:PET=2:1 | A | 50 | 578 | 40 | 340.3 | 1.55 | 13.95 | 38.20 | 37.30 | 24.50 | solid at room temperature |
| 6 | PFU:PE:PP:PET=2 4:5:5:2 | A | 50 | 599 | 60 | 426.2 | 1.08 | 9.65 | 35.05 | 49.70 | 15.25 | brown turbid partly solidified at room temperature |
| 7 | PFU:HDPE=2.4:1 | A | 25x180min 50x67min 100x14min* | 599 | 261 | 362.0 | 0.25 | 2.22 | 35.52 | 45.83 | 19.65 | brown turbid |
| 8 | PFU:PET=3.9:1 | A | 25x111min 50x89min 75x48min | 599 | 248 | 313.5 | 0.21 | 2.33 | 48.29 | 26.34 | 25.37 | brown turbid |
| 9 | PFU:HDPE=2:1 | B | 50x90min 100x30m in | 450 | 120 | 424.5 | 0.52 | 3.58 | 38.00 | 42.71 | 19.29 | yellow transparent |
| 10 | PFU:PET=2:1 | B | 50 | 440 | 70 | 296.9 | 0.81 | 6.00 | 43.35 | 29.36 | 27.29 | yellow transparent |
| 11 | Solid residue, test 5: PET=1 :1.35 | B | 50 | 535 | 60 | 130.1 * | 0.94 | 8.58 | 56.23 | 7.85 | 35.92 | yellow transparent |
| 12 | PFU:PVC=2:1 | B | 50 | 599 | 71 | 453.0 | 0.66 | 8.15 | 53.16 | 19.70 | 27.14 | yellow transparent |
| 13 | Solid residue, test 12: PVC=1 : 1 | B | 50 x20min 75x10min 100x17m in | 599 | 47 | 199.0* | 1.83 | 12.32 | 13.92 | 12.25 | 73.83 | yellow transparent |

EP 2 675 870 B1

| Test No. | Charge subjected to pyrolysis (ratio by weight) | Set-up | Delivered % power (%) | Tmax (°C) | Duration (min) | Pyrolysed mass (g) | $V_{M\%}$ (/min) | $V_{Mrisc}$ (°C/min) | Solid (wt%) | Liquid (wt%) | Gas (wt%) | Set-up of the liquid fraction |
|---|---|---|---|---|---|---|---|---|---|---|---|---|
| 14 | Solid residue, test 4: PS=1 :2 | A | 50 x42min 75x5m 100x12min | 578 | 59 | 196.3* | 1.58 | 9.46 | 6.83 | 89.25 | 3.92 | yellow transparent |

Set-up A: without fractionation system of the vapours in outlet from the oven;
Set-up B: with fractionation system of the vapours in outlet from the oven.
* Only polymeric material

Two fractions were collected in pyrolysis L7-L9, the second contained the oils obtained after ignition of all the generators.

Table 4 - characteristics of pyrolysis oils

| Test No. | Density at 25°C (g/cm$^3$) | PCS (MJ/Kg) | PCI (MJ/Kg) | Viscosity (cps) | C (wt. %) | H (wt. %) | N (wt. %) | S (wt. %) | H/C ratio (%) |
|---|---|---|---|---|---|---|---|---|---|
| 1 | 0.889 | 48 | 46 | n.d. | 85.78 | 11.01 | 1.29 | 1.0 | 0.153 |
| 2 | Nd | ND | ND | nd | 83.01 | 12.86 | 1.03 | ND | 0.155 |
| 3 | 0.831 | 46 | 44 | 2.79 | 82.08 | 11.37 | 2.97 | 0.50 | 0.135 |
| 4 | 0.866 | 39 | 38 | 0.79 | 37.49 | 3.61 | 2.67 | 0.38 | 0.096 |
| 5 | 0.938 | 39 | 37 | nd | 66.05 | 8.37 | 3.89 | 0.90 | 0.127 |
| 6 | Nd | 33 | 30 | nd | 68.55 | 10.8 | 3.57 | 0.70 | 0.158 |
| 9-A | 0.763 | 41 | 39 | 0.49 | 83.53 | 12.32 | 1.00 | 0.40 | 0.148 |
| 9-B | 0.910 | 45 | 43 | 1.31 | 43.60 | 6.06 | 1.97 | 0.30 | 0.139 |
| 10 | 0.856 | 40 | 39 | 0.85 | 57.71 | 5.45 | 5.81 | 0.60 | 0.094 |
| 11 | Nd | ND | ND | nd | 79.45 | 6.14 | 3.64 | ND | 0.077 |
| 12 | 0.903 | ND | ND | 1.56 | 86.10 | 9.90 | 1.03 | ND | 0.115 |
| 13 | 0.932 | ND | ND | 2.22 | 81.58 | 10.75 | 1.12 | ND | 0.132 |
| 14 | 0.917 | ND | ND | 0.90 | 70.24 | 5.94 | 0.96 | ND | 0.846 |

The GC-MS analysis of the pyrolysis oils has given considerable indications on the degradation of the polymeric charges. In the following tables are given the main products of degradation.

Table 5 - Prevalent substances in L3 (PFU - PP).

| N | Attribution | Composition (%) |
|---|---|---|
| 1 | Propane | 0.89 |
| 2 | 2-Butane (E) | 2.28 |
| 3 | Pentane | 3.80 |
| 4 | 1-Pentane | 1.23 |
| 5 | 2-Pentane | 1.14 |
| 6 | 2-Methyl-pentane | 1.62 |
| 7 | 1-Hexane | 2.54 |
| 8 | Toluene | 2.30 |
| 9 | 2,3-Dimethylesane | 1.30 |
| 10 | 2,4-Dimethyl-1-heptane | 12.47 |
| 11 | 1,3-Dimethyl-benzene | 1.06 |
| 12 | 1,4-Dimethyl-benzene | 1.22 |
| 13 | Styrene | 0.90 |
| 14 | 7-Methyl-4-undecane | 2.98 |
| 15 | Limonene | 3.14 |
| 16 | Indene | 0.91 |
| 17 | 2,4-Dimethyl-1-decane | 1.79 |

(continued)

| N | Attribution | Composition (%) |
|---|---|---|
| 18 | 4,6,8-Trimethyl-1-nonene | 0.96 |
| 19 | 7-Methylundecano | 3.40 |
| 20 | 7-Methyl-1-undecane | 2.24 |
| 21 | Elicosene | 1.34 |
| 22 | 1-Tricosene | 1.50 |
| 23 | Octadecane | 1.00 |
| 24 | Eicosene | 0.94 |
|   | IDENTIFIED TOTAL | 52.95 |

The presence of chain fragments up to $C_{20}$ is evident. It is interesting noting the presence of propane (0.89%), 2-methylpentane (1.62%) and 2,4-dimethyl-1-heptane (12.47%) respectively monomer, hydrogenated equivalent of the dimer and trimer of the propane thereof. Presence of these three molecules proves the efficient fragmentation of the PP.

Table 6 - Prevalent substances in L4 and L14 (PFU - PS; carbon residue and PS). nAr: non aromatic; Ar: aromatic.

| N | Attribution | L4 | L14 |
|---|---|---|---|
| 1 | 2-Butane (E) | 1.73 | |
| 2 | 1,3-Pentadiene | 0.77 | |
| 3 | 2-Pentane | 0.62 | |
| 4 | Benzene | 1.02 | 1.62 |
| 5 | Toluene | 6.85 | 8.99 |
| 6 | 1,3-Dimethylbenzene | 14.67 | 8.70 |
| 7 | 1,4-Dimethylbenzene | 0.91 | |
| 8 | Styrene | 22.36 | 47.49 |
| 9 | Cumene | 3.12 | |
| 10 | $\alpha$-Methylstyrene | 7.83 | 13.39 |
| 11 | Limonene | 1.46 | |
| 12 | 1,3-Diphenilpropane | 3.54 | |
| 13 | 1,1'-(1,3-Propanedil)bis-benzene | | 2.80 |
| 14 | 4-Pentyl-benzene | | 5.06 |
| 15 | 1,1'-Cyclopropylidenebis-benzene | | 2.54 |
| 16 | 2-Phenyl-naphthalene | | 1.56 |
|   | IDENTIFIED TOTAL | 64.88 | 92.15 |

Presence of styrene (22.36%), cumene (3.12%) and $\alpha$-methylstyrene (7.83%), typical products of the degradation of polystyrene, demonstrate the successful and complete pyrolysis of the polymer. The total conversion is supported by the absence of trimer styrene products.

In Table 7, are shown the most important products for the experiments of copyrolysis of PET and tyre. The pyrolysis carried out with the experimental set-up of Type B (L10 and L11) is compared with that carried out with set-up A (L5). Pyrolysis 11 was carried out on a mixture of PET and the residue of test 10. The substances obtained for the pyrolysis of this mixture lead into obtaining only the products of the polymer degradation.

*Table 7 - Prevalent substances in liquid products L5, L10 and L11 (PFU/carbon residue - PET).*

| N | Attribution | L5 | L10 | L11 |
|---|---|---|---|---|
| 1 | Acetaldehyde | 1.17 | | 2.06 |
| 2 | 1,3-Pentadiene | 2.28 | | |
| 3 | 3-Methyl-1-hexane | 1.60 | | |
| 4 | Benzene | 21.15 | 17.44 | 57.61 |
| 5 | Toluene | 6.19 | 7.31 | 7.15 |
| 6 | Cyclopentanone | 1.11 | | |
| 7 | 3,5-Dimethyl-ciclohexane | 0.96 | | |
| 8 | 1,3-Dimethyl-benzene | 2.83 | 4.19 | 4.73 |
| 9 | 1,4-Dimethyl-benzene | 2.44 | 3.44 | |
| 10 | Styrene | | 2.07 | 3.18 |
| 11 | 1,2-Dimethyl-benzene | 2.26 | 0.88 | |
| 12 | Benzaldehyde | | 0.89 | 1.61 |
| 13 | Propyl-benzene | | 1.00 | |
| 14 | 1,2,3-Trimethyl-benzene | 3.10 | 1.95 | |
| 15 | Isolimonene | | 0.86 | |
| 16 | $\alpha$-Methyl-styrene | | 0.96 | |
| 17 | 1,3,5-Trimethylbenzene | | 1.28 | |
| 18 | 1-Ethyl-3-methyl-benzene | | 1.19 | |
| 19 | 1,2,4,5-Tetramethyl-benzene | | 1.48 | |
| 20 | Limonene | 9.57 | 4.45 | |
| 21 | 1 H-Indene | 1.61 | | |
| 22 | Acetophenone | 1.24 | 1.13 | 2.19 |
| 23 | Benzoiphormic acid | 1.01 | 1.30 | 4.00 |
| 24 | Ethyl benzoate | 1.38 | 1.65 | |
| 25 | 4-Methyl-acetophenone | 2.20 | 1.52 | 6.84 |
| 26 | Benzoic acid | 3.39 | 2.10 | |
| 27 | Biphenyl | 2.41 | 0.97 | 3.40 |
| 28 | 4-formilbenzoic acid | | | 0.46 |
| 29 | 2,6,10,14-Tetramethyl-eptadecane | 0.81 | | |
| | IDENTIFIED TOTAL | 68.71 | 58.06 | 93.23 |

As expected, the substances attributed to gas chromatographic peaks for L15 are easily attributable to processes of degradation of the polymer chain of PET. In particular, the high presence of benzene may be attributed to the aromatic part of the polymer. The presence of such species as biphenyl or 4-methyl-acetophenone is explained by the coupling of two radicals; respectively between two phenyl radicals, and between the acetophenone radical and a methyl radical.

In Table 8 are shown the results of the GC-MS analysis of the two fractions obtained by the pyrolysis of HDPE with the experimental set-up of the B type. The products obtained by pyrolysis with the experimental set-up of the A type are not shown because they are solid products at room temperature. The second fraction was sampled with all generators ignited at full power.

EP 2 675 870 B1

*Table 8 - Prevalent substances in the liquid products L9-A and L9-B (PFU - HDPE).*

| N | Attribution | L9-A | L9-B |
|---|---|---|---|
| 1 | 2-Butane (E) | 1.66 | |
| 2 | 1-Pentane | 0.90 | 0.77 |
| 3 | Pentane | 0.86 | |
| 4 | 1,3-Pentadiene | 1.42 | |
| 5 | 1,4-Pentadiene | 1.51 | |
| 6 | 1-Hexane | 3.19 | 2.70 |
| 7 | Hexane | 1.23 | |
| 8 | Benzene | 1.10 | 1.28 |
| 9 | 1-Heptane | 2.70 | 2.19 |
| 10 | Heptane | 1.91 | |
| 11 | Toluene | 3.51 | 1.52 |
| 12 | 1 -Octane | 2.43 | 2.06 |
| 13 | Octane | 2.10 | |
| 14 | 1,3-Dimethylbenzene | 2.08 | |
| 15 | 1,4-Dimethylbenzene | 2.81 | |
| 16 | 1,2-Dimethylbenzene | 1.62 | 2.33 |
| 17 | 3-Decane | 2.96 | |
| 18 | Nonane | 2.20 | 1.06 |
| 19 | 1-Tertbutil-1,5-octadiene | 1.71 | |
| 20 | $\alpha$-Methyl-styrene | 0.94 | |
| 21 | 3-Undecane | 4.24 | 3.43 |
| 22 | Decane | 2.03 | 1.61 |
| 23 | 1-Ethyl-3-methylbenzene | 1.32 | |
| 24 | Limonene | 4.77 | |
| 25 | 2-Tridecane | 1.92 | 4.16 |
| 26 | 2,7-Dimethylottano | 1.47 | 2.72 |
| 27 | 3-Tridecane | 0.88 | 4.41 |
| 28 | Tridecane | | 3.60 |
| 29 | 2-Tetradecane | | 4.65 |
| 30 | 1-Methylnphatalene | | 0.57 |
| 31 | Tetradecane | | 4.29 |
| 32 | 4-Tetradecane | | 4.84 |
| 33 | 4,8-Dimethyltridecano | | 4.97 |
| 34 | 1-Esadecane | | 4.35 |
| 35 | 2,6-Dimethyleptadecane | | 5.44 |
| 36 | 1-Octadecane | | 2.52 |
| 37 | $C_{19}$ | | 4.07 |
| 38 | 1-Octadecane | | 1.26 |

13

(continued)

| N | Attribution | *L9-A* | L9-B |
|---|---|---|---|
| 39 | 10-Methylecoisane | | 3.05 |
| 40 | 5-Eicoisene | | 0.66 |
| 41 | $C_{21}$ | | 1.98 |
| 42 | $C_{36}$ | | 1.28 |
| 43 | $C_{36}$ | | 0.82 |
| | IDENTIFIED TOTAL | 55.47 | 78.59 |

The two collected fractions are composed, in addition to the same substances identified for the pyrolysis oils L1 and L2, by increasing chain olefins and their hydrogenated equivalents, i.e., linear hydrocarbons from $C_5$ to $C_{36}$.

In Table 9, are shown the most important products for the copyrolysis experiments of PVC and tyre. Pyrolysis 13 was carried out on a mixture between PVC and the residue of test 12. The substances obtained for the pyrolysis of this mixture lead into obtaining only the products of the polymer degradation.

Table 9 - Prevalent substances in the liquid products L12 and L13 (PFU - PVC).

| N | Attribution | L12 | L13 |
|---|---|---|---|
| 1 | t-Butylchloride | 5.48 | |
| 2 | Benzene | 18.51 | 18.56 |
| 3 | 2-Chloride-2-methylbutane | 3.09 | 0.41 |
| 4 | 2-Chloride-3-methylpentane | 1.04 | 0.2 |
| 5 | Toluene | 14.79 | 8.73 |
| 6 | 3-Chloride-3-methylpentane | 1.91 | |
| 7 | Oct-3-ene | | 2.28 |
| 8 | 6-Chloride-1-hexanole | 2.46 | |
| 9 | 4-Vinylcyclohexane | 1.12 | |
| 10 | 1,3-Dimethylbenzene | 7.51 | 4.25 |
| 11 | 1,4-Dimethylbenzene | 3.73 | 2.49 |
| 12 | 1,4-Dimethylbenzene | 1.46 | 1.05 |
| 13 | Styrene | 2.44 | 0.46 |
| 14 | 1, 2-Di m ethyl benzene | 4.18 | 3.44 |
| 15 | 2,4,4-Trimethyl-1-pentane | 1.17 | |
| 16 | 2,4,4-Trimethyl-1-esenane | 1.15 | |
| 17 | 1-Ethyl-2-methylbenzene | 1.25 | 2.13 |
| 18 | 1,2,3-Trimethylbenzene | 1.37 | 1.63 |
| 19 | 1,2-Dimethyl-3-methylencyclopentane | 1.38 | |
| 20 | 1-Ethyl-4-methylbenzene | 0.75 | 1.48 |
| 21 | 1,3,5-Trimethylbenzene | 1.15 | 1.57 |
| 22 | sec-Butylbenzene | 1.38 | 1.27 |
| 23 | 3-Methylcumene | 3.29 | |
| 24 | Cyclopropyl-benzene | 1.23 | 2.09 |
| 25 | 1,2,3,4,5,8-Hexahydronaphthalene | 1.23 | |

(continued)

| N | Attribution | L12 | L13 |
|---|---|---|---|
| 26 | 1-Methyl-1 H-indene | 0.4 | 1.41 |
| 27 | 4-Methyl-2,3-dihydro-1H-indene | | 1.03 |
| 28 | 2-Methyl-2,3-dihydro-1H-indene | | 1.55 |
| 29 | Naphthalene | 2.01 | 4.01 |
| 30 | 2,6-Dimethyl-2,4,6-octatriene | 1.03 | |
| 31 | Benzocycloheptatriane | | 2.59 |
| 32 | 1-Methyl naphthalene | 0.96 | 0.2 |
| | IDENTIFIED TOTAL | 87.47 | 62.83 |

All liquid products at room temperature were subjected to fractional distillation processes (see Table 10) in order to:

1. Obtain fractions with a boiling point comparable with that of commercial petroleum products.

2. Evaluate the possibility of isolating a single substance or alternatively obtain a fraction enriched in that substance.

*Table 10 - Fractioned distillation of pyrolysis oils: percentage of the product that distils depending on the boiling temperature.*

| Liquid Product | Duration (min) | $V_{M\%}$ (/min) | Non-distilled residue (%) | Total distilled (%) | Maximum temperature of distillation (°C) |
|---|---|---|---|---|---|
| L2 | 33 | 1.74 | ND | ND | ND |
| L3 | 39 | 1.66 | 77.16 | 22.84 | 195 |
| L4 | 60 | 1.00 | 24.63 | 75.37 | 238 |
| L5 | 40 | 1.55 | 72.02 | 27.98 | 190 |
| L6 | 60 | 1.25 | ND | ND | ND |
| L9-A | 120 | 0.52 | 2.29 | 97.71 | 196 |
| L9-B | 120 | 0.52 | 55.23 | 44.77 | 230 |
| L10 | 70 | 0.81 | 4.37 | 95.63 | 258 |
| L11 | 60 | 0.73 | ND | ND | ND |
| L12 | 71 | 0.61 | 41.47 | 58.53 | 217 |
| L13 | 47 | 1,83 | 39.25 | 60.75 | 226 |
| L14 | 59 | 1.58 | 13.28 | 86.72 | 169 |

The distilled fractions, regardless of the distilled amounts, have boiling temperatures typical of commercial petrol.
All fractions obtained from each distillation were analysed by GC-MS with the purpose of determining the majority substances in each one thereof. In the following tables, are shown the three majority substances in each fraction, with related percentages identified by the gas chromatography analysis.

*Table 11 - Prevalent substances in the fractions obtained from the distillation of L3.*

| Fraction | Temperature range (°C) | Substance | Composition (%) |
|---|---|---|---|
| 1 | 20-40 | 2-Methylbutane | 18.70 |
| | | 2-Methylpentane | 14.50 |
| | | 2-Methyl-1-pentane | 19.58 |
| 2 | 40-50 | 2-Methylbutane | 12.17 |
| | | 2-Methylpentane | 15.45 |
| | | 2-Methyl-1-pentane | 25.12 |
| 3 | 50-63 | 2-Methylbutane | 7.96 |
| | | 2-Methyl-1-pentane | 11.21 |
| | | Benzene | 7.78 |
| 4 | 63-133 | Toluene | 8.19 |
| | | 4-Methylheptane | 6.59 |
| | | 2,4-Dimethyl-1-heptane | 65.50 |
| 5 | 133-148 | 2,4-Dimethyl-1-heptane | 72.62 |
| | | 1,4-Dimethylbenzene | 6.62 |
| | | 4-Methyl-1-octane | 11.33 |
| 6 | 148-155 | 2,4-Dimethyl-1-heptane | 45.16 |
| | | 1,4-Dimethylbenzene | 5.72 |
| | | 4-Methyl-1 -octane | 26.65 |
| 7 | 155-181 | 2,4-Dimethyl-1-heptane | 7.41 |
| | | 4-Methyl-1-octane | 26.65 |
| | | Limonene | 15.98 |
| 8 | 181-195 | 2,8-Dimethylundecane | 7.33 |
| | | Limonene | 22.80 |
| | | 7-Methyl-1-undecane | 9.97 |

*Table 12 - Prevalent substances in the fractions obtained from the distillation of L4.*

| Fraction | Temperature range (°C) | Substance | Composition (%) |
|---|---|---|---|
| 1 | 20-40 | 2-Butane (E) | 12.96 |
| | | 1,3-Pentadiene | 20.73 |
| | | 3-Methyl-1-esane | 14.40 |
| 2 | 40-59 | Toluene | 42.58 |
| | | 1,3-Dimethylbenzene | 17.65 |
| | | Styrene | 11.15 |
| 3 | 59-63 | Toluene | 28.31 |
| | | 1,3-Dimethylbenzene | 33.63 |
| | | Styrene | 34.36 |

(continued)

| Fraction | Temperature range (°C) | Substance | Composition (%) |
|---|---|---|---|
| 4 | 63-164 | Toluene | 11.73 |
| | | 1,3-Dimethylbenzene | 36.54 |
| | | Styrene | 48.79 |
| 5 | 164-176 | 1,3-Dimethylbenzene | 27.95 |
| | | Styrene | 55.15 |
| | | $\alpha$-Methyl-styrene | 8.87 |
| 6 | 176-201 | 1,3-Dimethyl-benzene | 9.95 |
| | | Styrene | 36.06 |
| | | $\alpha$-Methyl-styrene | 33.66 |
| 7 | 201-220 | 1-Ethyl-4-methylbenzene | 13.50 |
| | | Limonene | 8.13 |
| | | 1-Methyl-4-(1-methyl-ethenil)benzene | 5.87 |
| 8 | 220-238 | 5-Methyl-2.3-dihydro-1H-indane | 5.74 |
| | | 3-Methyl-1H-Indane | 3.62 |
| | | Pentyl benzene | 4.04 |

*Table 13 - Prevalent substances in the fractions obtained from the distillation of L5.*

| Fraction | Temp. range (°C) | Substance | Composition (%) |
|---|---|---|---|
| 1 | 25-45 | n.d.* | n.d. |
| 2 | 45-62 | 2-Pentane (E) | 7.59 |
| | | 3-Methyl-1-esane | 5.22 |
| | | Benzene | 74.88 |
| 3 | 62-77 | 2-Pentane (E) | 3.75 |
| | | Benzene | 84.72 |
| | | Toluene | 11.53 |
| 4 | 77-150 | 1,3-Dimethylbenzene | 15.87 |
| | | 1,4-Dimethylbenzene | 16.94 |
| | | Limonene | 16.90 |
| 5 | 150-180 | Styrene | 4.73 |
| | | 5-Ethyl-1-methylthiophene | 11.98 |
| | | Limonene | 42.27 |
| *) fraction 1 was a negligible quantity and was not analysed | | | |

*Table 14 - Prevalent substances in the fractions obtained from the distillation of L7-A.*

| Fraction | Temperature range (°C) | Substance | Composition (%) |
|---|---|---|---|
| 1 | 20-40 | 1-Hexane | 6.14 |
| | | Hexane | 3.73 |
| | | Benzene | 4.15 |
| 2 | 40-60 | Benzene | 6.13 |
| | | Cycloheptane | 6.00 |
| | | Toluene | 6.14 |
| 3 | 60-74 | Toluene | 7.63 |
| | | 1-Octane | 6.09 |
| | | 2,4-Dimethylheptane | 5.40 |
| 4 | 74-158 | 1,4-Dimeti-benzene | 5.79 |
| | | 1-Nonane | 8.18 |
| | | nonane | 5.35 |
| 5 | 158-170 | 1-Decane | 6.56 |
| | | 1-Methyl-3-(1-methylethyl)benzene | 7.49 |
| | | Limonene | 5.86 |
| 6 | 170-185 | 1-Methyl-3-(1-methylethyl)benzene | 6.78 |
| | | 1-Undicane | 7.14 |
| | | Undicane | 6.85 |

*Table 15 - Prevalent substances in the fractions obtained from the distillation of L7-B.*

| Fraction | Temperature range (°C) | Substance | Composition (%) |
|---|---|---|---|
| 1 | 20-55 | 1-Hexane | 6.31 |
| | | 1-Hheptane | 5.19 |
| | | Heptane | 3.90 |
| 2 | 55-146 | Styrene | 14.22 |
| | | 1-Nonane | 9.20 |
| | | 1-Decane | 11.42 |
| 3 | 146-176 | Styrene | 10.19 |
| | | 1-Nonane | 6.76 |
| | | 1-Decane | 12.25 |
| 4 | 176-245 | 1-Undicane | 5.17 |
| | | 1-Dodicane | 5.12 |
| | | Dodicane | 5.01 |

Table 16- Prevalent substances in the fractions obtained from the distillation of L8-A.

| Fraction | Temperature range (°C) | Substance | Composition (%) |
|---|---|---|---|
| 1 | 20-40 | 2-Pentane | 4.49 |
| | | Dimethyl oxalate | 5.65 |
| | | 3-Methyl-2-pentane | 5.12 |
| 2 | 40-60 | Benzene | 13.47 |
| | | 1-Ethylcyclohexane | 3.47 |
| | | Toluene | 8.18 |
| 3 | 60-76 | Benzene | 7.44 |
| | | Toluene | 15.07 |
| | | 1,3-Dimethylbenzene | 6.43 |
| 4 | 76-158 | Toluene | 5.29 |
| | | 1,3-Dimethylbenzene | 10.66 |
| | | 1,4-Dimethyl benzene | 12.26 |
| 5 | 158-170 | 1,3-Dimethylbenzene | 7.36 |
| | | 1,3,5-Trimethylbenzene | 5.16 |
| | | 1,2,4,5-Tetramethylbenzene | 5.61 |
| 6 | 170-269 | n.d.* | ND |
| * Fraction 6 was solid at room temperature and was not analysed | | | |

Table 17 - Prevalent substances in the fractions obtained from the distillation of L8-B.

| Fraction | Temperature range (°C) | Substance | Composition (%) |
|---|---|---|---|
| 1 | 20-40 | 3-Hexane | 5.24 |
| | | Benzene | 27.17 |
| | | Toluene | 6.82 |
| 2 | 40-48 | Benzene | 48.40 |
| | | 1-Heptane | 5.69 |
| | | Toluene | 16.48 |
| 3 | 48-158 | Toluene | 11.08 |
| | | 1,3-Dimethylbenzene | 17.78 |
| | | 1,4-Dimethylbenzene | 16.00 |
| 4 | 158-170 | 1,2,3-Trimethylbenzene | 10.46 |
| | | 1,2,4-Trimethyl benzene | 6.01 |
| | | 1,3,5-Trimethylbenzene | 5.03 |
| 5 | 170-252 | 1-Methylnaftalene | 4.95 |
| | | 2-Methylnaftalene | 3.21 |
| | | Biphenyl | 4.26 |

*Table 18- Prevalent substances in the fractions obtained from the distillation of L9-A.*

| Fraction | Temperature range (°C) | Substance | Composition (%) |
|---|---|---|---|
| 1 | 20-45 | 1,3-Pentadiane | 10.87 |
| | | 1,4 - Pentadiane | 10.84 |
| | | 3-Hexane | 18.81 |
| 2 | 45-65 | 1,3-Pentadiane | 7.33 |
| | | 3-Hexane | 20.60 |
| | | Hexane | 8.95 |
| 3 | 65-107 | 1-Heptane | 11.66 |
| | | Heptane | 8.18 |
| | | Toluene | 11.92 |
| 4 | 107-152 | Toluene | 9.92 |
| | | 1 -Octane | 10.45 |
| | | 1,4-Dimethylbenzene | 10.71 |
| 5 | 152-178 | 3 - Decane | 9.11 |
| | | 3-Undicane | 9.46 |
| | | Limonene | 10.25 |
| 6 | 178-196 | 3-Undicane | 14.70 |
| | | Limonene | 27.41 |
| | | 2-Tridecane | 11.80 |

*Table 19 - Prevalent substances in the fractions obtained from the distillation of L10.*

| Fraction | Temperature range (°C) | Substance | Composition (%) |
|---|---|---|---|
| 1 | 20-75 | 1,3 - Pentadiene | 5.88 |
| | | 3-Methyl-1-hexane | 5.38 |
| | | Benzene | 73.62 |
| 2 | 75-80 | Toluene | 12.86 |
| | | 1-Octane | 27.14 |
| | | 2-Decane | 15.05 |
| 3 | 80-102 | Benzene | 28.17 |
| | | Toluene | 41.65 |
| | | 1,3-Dimethylbenzene | 9.91 |
| 4 | 103-150 | n.d.* | n.d. |
| 5 | 150-180 | n.d.* | n.d. |
| 6 | 180-255 | 1,2,4,5-Tetramethylbenzene | 6.17 |
| | | Limonene | 18.94 |
| | | Ethyl benzoate | 5.81 |
| *) Fractions 4 and 5 were negligible quantities and were not analysed | | | |

*Table 20 - Prevalent substances in the fractions obtained from the distillation of L12.*

| Fraction | Temperature range (°C) | Substance | Composition (%) |
|---|---|---|---|
| 1 | 20-40 | t-Butylchloride | 17.00 |
| | | Benzene | 61.61 |
| | | 2-Chloride-2-methylbutane | 8.75 |
| 2 | 40-44 | Benzene | 41.87 |
| | | 2-Chloride-2-methylbutane | 8.30 |
| | | Toluene | 22.54 |
| 3 | 44-145 | Toluene | 50.13 |
| | | 3-Chloride-3-methylpentane | 5.56 |
| | | 6-Chloride-hexan-1-ole | 4.73 |
| 4 | 145-180 | Toluene | 11.64 |
| | | 1,3-Dimethylbenzene | 17.21 |
| | | 1,4-Dimethylbenzene | 14.09 |
| 5 | 180-217 | n.d. | 4.05 |
| | | 1,2,3,4,4a,8a-Hexahydronaphthalene | 3.51 |
| | | Decaline | 4.00 |

*Table 21 - Prevalent substances in the fractions obtained from the distillation of L13.*

| Fraction | Temperature range (°C) | Substance | Composition (%) |
|---|---|---|---|
| 1 | 20-40 | Benzene | 38.33 |
| | | 3,3,4-Trimethylesane | 4.62 |
| | | Toluene | 5.86 |
| 2 | 40-48 | Benzene | 33.34 |
| | | 3,3,4-Trimethylesane | 6.88 |
| | | Toluene | 12.14 |
| 3 | 48-145 | 1,3-Dimethylbenzene | 6.92 |
| | | 1,4-Dimethylbenzene | 9.02 |
| | | 1,2-Dimethylbenzene | 8.23 |
| 4 | 145-174 | 1,2,3-Trimethylbenzene | 5.60 |
| | | 1-Ethyl-4-methylbenzene | 4.55 |
| | | 1,3,5-Trimethylbenzene | 5.89 |
| 5 | 174-226 | n.d. | 2.48 |
| | | n.d. | 5.24 |
| | | n.d. | 2.47 |

*Table 22 - Prevalent substances in the fractions obtained from the distillation of L14.*

| Fraction | Temperature range (°C) | Substance | Composition (%) |
|---|---|---|---|
| 1 | 20-56 | Benzene | 13.73 |
| | | Toluene | 29.75 |
| | | Styrene | 36.80 |
| 2 | 56-74 | Toluene | 23.33 |
| | | 1,3-Dimethylbenzene | 13.78 |
| | | Styrene | 51.39 |
| 3 | 74-77 | Toluene | 15.97 |
| | | 1,3-Dimethylbenzene | 14.23 |
| | | Styrene | 60.96 |
| 4 | 77-151 | 1,3-Dimethylbenzene | 12.22 |
| | | Styrene | 69.68 |
| | | $\alpha$-Methylstyrene | 10.80 |
| 5 | 151-169 | Styrene | 50.50 |
| | | $\alpha$-Methylstyrene | 41.59 |

It was not possible to isolate in any fraction a single substance, but fractions enriched up to more than 70%.

In the above-mentioned pyrolysis of plastic materials, in the presence of a suitable quantity of the solid residue of a previous PFU pyrolysis, the obtained results are similar to those of PFU/plastic materials pyrolysis, taking into consideration that in the collected fractions, the products of PFU decomposition are not present.

All gaseous mixtures obtained in the experiments are colourless, transparent and with an unpleasant smell of composition similar to that obtained from the pyrolysis of only PFU

In the gaseous products of pyrolysis of PFU/PET, or residue carbon/PET, a considerable amount of acetaldehyde was found.

In the gaseous products of pyrolysis of PFU/PVC or residue carbon/PVC, HCl was present.

*Table 23 - Prevalent substances in gaseous products*

| Substance | G1 |
|---|---|
| C1 e C2 | 76.79 |
| Propylene | 3.70 |
| 1-Butane | 10.10 |
| 2-Butane-trans | 0.94 |
| 2-Butane-cis | 0.56 |
| 2-Methyl-1-butane | - |
| n-Pentane | 0.75 |
| Isoprene | 3.60 |
| 2-Hexane | - |
| TOTAL | 96.44 |

The solid products obtained from copyrolysis of polymeric materials and tyres in appearance are identical to those obtained by simple tyre pyrolysis, that is, the solid residue in the reaction vessel at the end of the experiment, is a friable material, black in colour, of the same sizes of the initial tyre fragments. The material after fragmentation and homogenisation is as a black powder mixed with metal wires removable with a simple magnet. The solid residue of tests 2 to 10, and 12, therefore, is the same as that obtained from a pyrolysis test of only tyres (test 1).

In tests 11, 13 and 14, the PFU has been replaced with the solid residue of the previous test. Solid S11 is a single solid compact block, but fragile. Notwithstanding, the different appearance from other friable solid products, the conversion of PET is practically total; the amount of solid residue is only increased by 2%, compared to the initial PET.

The solid products, after having been deprived of the metal wires with a magnet, are composed mainly of carbon (Table 24). The presence of hydrogen is minimal and in samples from S2 to S6 is attributable to the incomplete volatilisation of all the substances containing hydrogen. In samples from S9 to S13 the majority concentration of hydrogen can be explained by the presence of oil which, in the last phase of the experiment, was present in the dephlegmator and returned to the reaction flask

*Table 24 - CHNS elemental analysis of solid products*

| Solid Product | C (wt%) | H (wt%) | N (wt%) | S (wt%) | H/C*100 Ratio |
|---|---|---|---|---|---|
| S1 | 82.31 | 0.83 | 0.48 | 2.0 | 1.01 |
| S2 | 86.67 | 0.780 | 0.49 | ND | 0.90 |
| S3 | 87.74 | 0.29 | 0.44 | 1.7 | 0.33 |
| S4 | ND | ND | ND | 0.2 | ND |
| S5 | 87.72 | 0.36 | 0.80 | 2.3 | 0.43 |
| S6 | 87.10 | 0.517 | 0.25 | 1.8 | 0.58 |
| S9 | 87.24 | 1.27 | 0.00 | 1.3 | 1.46 |
| S10 | 87.36 | 1.17 | 0.17 | 1.3 | 1.34 |
| S11 | 83.79 | 1.12 | 0.17 | ND | 1.34 |
| S12 | 44.65 | 0.98 | 0.12 | ND | 0.022 |
| S13 | 62.77 | 1.60 | - | ND | 0.026 |
| S14 | 80.21 | 1.15 | 0.68 | ND | 0.014 |

The sulphur content reaches a minimum in S4. For the other solid products, the values do not vary from those obtained for the pyrolysis residues of only PFU (S1). All the pyrolysis is nearly complete and the contribution by mass of the residue of each polymeric material mixed with the tyre is minimal

**Claims**

1. Process comprising pyrolysing a material consisting of plastic such as polyethylene (PE), polypropylene (PP), polystyrene (PS), polyethylene terephthalate (PET), polyvinyl chloride (PVC) and mixtures thereof in the presence of end-of-life tyres (PFU), or the solid pyrolysis residues thereof or other carbon materials, by irradiation with microwaves (MW), to obtain pyrolysis oils having a content greater than 50% by weight of hydrocarbons distillable between 20 and 250 °C and having a sulphur content less than 1% by weight, said process **characterised in that**:
the delivery of the MW is at such a power level as to obtain a mean percentage pyrolysis rate ($V_{M\%}$) of less than, or equal to, 1.0%/min and/or a mean heating rate ($V_{M\,risc}$) of less than, or equal to, 10 °C/min, in case of pyrolysis induced by PFU; or delivery of the MW at such a power level as to obtain a mean pyrolysis rate ($V_{M\%}$) of less than or equal to 2.0%/min and/or a mean heating rate ($V_{M\,risc}$) of less than or equal to 15 °C/min, in the case of pyrolysis induced by PFU pyrolysis residues.

2. Process according to claim 1 wherein the plastic material/PFU weight ratio varies between 0.25 and 8.0, while in the case of the use of plastic materials/solid PFU pyrolysis residue, said ratio varies between 1.0 and 2.0.

3. Process according to claim 1 wherein $V_{M\%}$ is greater than 0.2 min$^{-1}$ and/or $V_{M\,risc}$ is greater than 2.0 °C/min, when PFU are used in the mixture with plastic materials; or in the case of pyrolysis of plastic materials induced by the presence of PFU pyrolysis residues, then $V_{M\%}$ is greater than 0.7/min, which corresponds to a $V_M$ rise greater than 8.0 °C/min.

4. Process according to any one of the preceding claims wherein to lower the sulphur content in pyrolysis oil, a sulphurated compounds sequestering agent, e.g. Ca(OH)$_2$, is used during the process.

**5.** Process according to any one of the preceding claims wherein for delivery of the MW, one or more generators are used, operating at a frequency of 2.45 GHz.

## Patentansprüche

**1.** Verfahren umfassend das Pyrolysieren eines Materials bestehend aus Kunststoff wie Polyethylen (PE), Polypropylen (PP), Polystyrol (PS), Polyethylenterephthalat (PET), Polyvinylchlorid (PVC) und Mischungen davon in Anwesenheit von Altreifen (PFU) oder festen Pyrolyserückständen davon oder sonstigem Kohlenstoffmaterial durch Mikrowellenbestrahlung (MW), um Pyrolyseöle mit einem Gehalt von mehr als 50 Gew.-% an Kohlenwasserstoffen zu erhalten, die zwischen 20 und 250 °C destillierbar sind und einen Schwefelgehalt von weniger als 1 Gew.-% aufweisen, wobei das Verfahren **dadurch gekennzeichnet ist, dass**:
die Bereitstellung von Mikrowellen MW bei einer derartigen Leistungsstufe erfolgt, dass eine durchschnittliche prozentuale Pyrolysegeschwindigkeit ($V_{M\%}$) von kleiner oder gleich 1,0%/min und/oder eine durchschnittliche Aufheizgeschwindigkeit ($V_{M\,risc}$) von kleiner oder gleich 10 °C/min bei PFU-induzierter Pyrolyse erreicht wird; oder die Bereitstellung von Mikrowellen MW bei einer derartigen Leistungsstufe erfolgt, dass eine durchschnittliche Pyrolysegeschwindigkeit ($V_{M\%}$) von kleiner oder gleich 2,0%/min und/oder eine durchschnittliche Aufheizgeschwindigkeit ($V_{M\,risc}$) von kleiner oder gleich 15 °C/min bei durch PFU-Pyrolyserückstände induzierter Pyrolyse erreicht wird.

**2.** Verfahren nach Anspruch 1, wobei das Gewichtsverhältnis zwischen Kunststoffmaterial und PFU zwischen 0,25 und 8,0 variiert, während bei Verwendung von Kunststoffmaterialien/feste PFU-Pyrolyserückständen das Verhältnis zwischen 1,0 und 2,0 variiert.

**3.** Verfahren nach Anspruch 1, wobei $V_{M\%}$ größer als 0,2 min$^{-1}$ und/oder $V_{M\,risc}$ größer als 2,0 °C/min ist, wenn PFU in der Mischung mit Kunststoffmaterialien verwendet wird; oder falls die Pyrolyse von Kunststoffmaterialien in Anwesenheit von PFU-Pyrolyserückständen induziert wird, dann ist $V_{M\%}$ größer als 0,7/min, was einer $V_{M\,risc}$ von größer als 8,0 °C/min entspricht.

**4.** Verfahren nach einem der vorstehenden Ansprüche, wobei zur Verminderung des Schwefelgehalts im Pyrolyseöl ein Schwefelverbindungs-Sequestriermittel, beispielsweise Ca(OH)$_2$, während des Verfahrens verwendet wird.

**5.** Verfahren nach einem der vorstehenden Ansprüche, wobei für die Bereitstellung der Mikrowellen MW ein oder mehrere Generatoren verwendet werden, die bei einer Frequenz von 2,45 GHz arbeiten.

## Revendications

**1.** Procédé consistant à pyrolyser une matière constituée de plastique tel que le polyéthylène (PE), le polypropylène (PP), le polystyrène (PS), le polytéréphtalate d'éthylène (PET), le polychlorure de vinyle (PVC) et leurs mélanges en présence de pneumatiques en fin de vie utile (PFU), ou de leurs résidus de pyrolyse solides ou d'autres matières carbonés, par irradiation avec des micro-ondes (MW), pour obtenir des huiles de pyrolyse ayant une teneur supérieure à 50 % en poids d'hydrocarbures pouvant être distillés entre 20 et 250°C et ayant une teneur en soufre de moins de 1 % en poids, ledit procédé étant **caractérisé en ce que** :
l'application des MW est à un niveau de puissance tel qu'il permet d'obtenir une vitesse de pyrolyse moyenne en pourcentage ($V_{M\%}$) de moins de, ou égale à, 1,0 %/min et/ou une vitesse moyenne de chauffage ($V_{M\,risc}$) de moins de, ou égale à 10°C/min, dans le cas d'une pyrolyse induite par des PFU ; ou l'application des MW est à un niveau de puissance tel qu'il permet d'obtenir une vitesse de pyrolyse moyenne ($V_{M\%}$) de moins de, ou égale à, 2,0 %/min et/ou une vitesse moyenne de chauffage ($V_{M\,risc}$) de moins de, ou égale à, 15°C/min, dans le cas d'une pyrolyse induite par des résidus de pyrolyse de PFU.

**2.** Procédé selon la revendication 1, dans lequel le rapport de poids matière plastique/PFU varie entre 0,25 et 8,0, tandis que dans le cas de l'utilisation de matières plastiques/résidus de pyrolyse de PFU solides, ledit rapport varie entre 1,0 et 2,0.

**3.** Procédé selon la revendication 1, dans lequel $V_{M\%}$ est supérieure à 0,2 min$^{-1}$ et/ou $V_{M\,risc}$ est supérieure à 2,0°C/min, lorsque des PFU sont utilisés dans le mélange avec des matières plastiques ; ou dans le cas de la pyrolyse de matières plastiques induite par la présence de résidus de pyrolyse de PFU, alors $V_{M\%}$ est supérieure à 0,7/min, ce qui correspond à une $V_{M\,risc}$ supérieure à 8,0°C/min.

4. Procédé selon l'une quelconque des revendications précédentes, dans lequel, pour abaisser la teneur en soufre de l'huile de pyrolyse, un agent de séquestration de composés sulfurés, par ex. $Ca(OH)_2$ est utilisé au cours du procédé.

5. Procédé selon l'une quelconque des revendications précédentes, dans lequel pour l'application des MW, un ou plusieurs générateurs sont utilisés, fonctionnant à une fréquence de 2,45 GHz.

*Figure 1* - Experimental apparatus (Set-up A) used for tyre and plastic material fragments copyrolysis

*Figure 2* - Experimental apparatus with fractionation (Set-up B) used for for tyre and plastic material fragments copyrolysis

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5387321 A
- US 5330623 A

- US 6184427 B

**Non-patent literature cited in the description**

- **P.T. WILLIAMS ; E.A. WILLIAMS.** *Energy & Fuel,* 1999, vol. 13, 188